(19) **Europäisches Patentamt**

**European Patent Office**

**Office européen des brevets**

(11) **EP 1 016 459 A1**

(12) **EUROPEAN PATENT APPLICATION**
published in accordance with Art. 158(3) EPC

(43) Date of publication:
05.07.2000 Bulletin 2000/27

(51) Int. Cl.$^7$: **B01J 35/02**, B01J 21/06, B01J 23/06

(21) Application number: 98928588.7

(22) Date of filing: 18.06.1998

(86) International application number:
PCT/JP98/02744

(87) International publication number:
WO 98/58736 (30.12.1998 Gazette 1998/52)

(84) Designated Contracting States:
DE GB

(30) Priority: 20.06.1997 JP 16387397
24.12.1997 JP 35576797

(71) Applicant:
Sumitomo Metal Industries Limited
Osaka-shi, Osaka 541-0041 (JP)

(72) Inventors:
• MASAKI, Yasuhiro
Sakai-shi, Osaka 590-0984 (JP)
• TAKAHASHI, Masaru
Amagasaki-shi, Hyogo 661-0014 (JP)
• IKISHIMA, Kenji
Kobe-shi, Hyogo 651-2102 (JP)
• SAKODA, Akito
Kyoto-shi, Kyoto 603-8178 (JP)

(74) Representative:
Woods, Geoffrey Corlett
J.A. KEMP & CO.
Gray's Inn
14 South Square
London WC1R 5LX (GB)

(54) **TITANIUM OXIDE-BASED PHOTOCATALYST, PROCESS FOR PREPARING THE SAME, AND USE THEREOF**

(57)    The photocatalyst of the invention is a photocatalyst comprising mainly titanium oxide and crystalline zirconium titanate wherein a ratio of zirconium to titanium (Zr/Ti) by atomic percentage is in a rage of 0.001 to 0.5. This photocatalyst may be used even in the form of a thin film fixed onto the surface of a substrate such as a metallic material, an inorganic material and an organic material. This photocatalyst can be produced by calcining a reacted product of a titanium compound with a zirconium compound in air atmosphere. This photocatalyst or a material carrying the photocatalyst thereon enables a harmful substances in air or in water, or a substances deposited on the material to be decomposed, rendered harmless or removed under photo irradiation.

**EP 1 016 459 A1**

**Description**

TECHNICAL FIELD

The present invention relates to a titanium oxide-based photocatalyst excellent in photocatalytic action, a material provided thereon with a layer of this titanium oxide-based photocatalyst, a method for preparation of the same, and use thereof.

BACKGROUND ART

When a semiconductor is irradiated with light of higher energy than its band gap, electrons having strong reducing action and holes having strong oxidizing action are generated on the irradiated face. Materials such as organic matter upon contacting with the surface of the semiconductor in this state are degraded by the strong oxidation-reduction agency of the semiconductor.

Recently, the techniques of applying the photocatalytic action of such semiconductors to environmental cleaning, such as degrading pollutants in air, water etc. or rendering them nontoxic, deodorization in living space, stain resistance on the surface of a solid, sterilization etc. are extensively developed. Chemically stable titanium dioxide which has a high photocatalytic activity, does not exert an adverse effect on the human body and is chemically stable, is considered the most appropriate for semiconductor photocatalysts used for such purposes.

However, it cannot be said that conventional titanium dioxide is satisfactory in respect of the photocatalytic activity of titanium dioxide itself. Further, titanium dioxide is used generally in the form of a thin film fixed onto the surface of materials such as metals, ceramics etc. for application thereof to the above-described environmental cleaning. In such usage, however, the surface area (actual reaction area) for the photocatalyst to exhibit its photocatalytic action is limited, so there is the problem that the efficiency of the photocatalyst cannot be improved satisfactorily. To solve these problems, there is a need for development of titanium dioxide having a high photocatalytic activity.

Addition of noble metals such as platinum, palladium and ruthenium to titanium dioxide has been attempted in the techniques of improving the photocatalytic activity of titanium dioxide, as shown in e.g. in a quarterly magazine "Kagaku Sosetsu" (1994), No. 23, pp. 69-70. However, even if such an improved photocatalyst is used, a large amount of the photocatalyst is required for effectively removing pollutants and addition of expensive noble metals causes an increase in costs, and therefore, the use of this photocatalyst in a commercial scale has been difficult.

Further, a binary metal oxide photocatalyst comprising zirconium oxide added to titanium dioxide is reported in Environ. Sci. Technol., Vol. 30 (1996), p. 647. This photocatalyst is produced by mixing a titanium dioxide sol with a zirconium oxide sol and calcining the mixture. The photocatalyst after calcination is composed of titanium dioxide and zirconium titanate wherein the zirconium titanate is amorphous. This photocatalyst has a large surface area, and it is considered that an acid point occurring on its surface acts as an active site on the catalyst, thus improving the photocatalytic activity. However, it is assumed that zirconium titanate does not contribute to improvement of the activity of titanium dioxide. Accordingly, this photocatalyst does not attain a photocatalytic activity enough to be practically applicable in a commercial scale.

As described above, the photocatalyst is generally used in a thin film fixed onto the surface of a material, and the following techniques are known for such use.

JP-A 7-171408 discloses a photocatalyst comprising photocatalyst particles adhering to a substrate via a hard degradable binder. The technique shown in this prior art is that a coating containing photocatalyst particles obtained in a known method and a hard degradable binder is applied to the surfaces of substrates such as various products and then solidified. It is considered that by applying this prior art, the photocatalyst can be formed relatively easily on the surfaces of various products.

Further, JP-A 9-173865 discloses a photocatalyst provided with a supported layer comprising silica particles on the surface of a substrate, wherein the supported layer is provided thereon with smaller titania particles than silica particles. In this prior art, the silica particles constituting the supported layer are rendered denser at the side of the substrate (by arranging silica particles of small diameter), the adhesion between the substrate and the supported layer is raised, the silica particles at the side of the photocatalyst layer are dispersed sparsely (by arranging silica particles of large diameter), and the titania particles are allowed to firmly adhere to the supported layer. By way of example, its application to the light-reflective surface of a lamp or light is disclosed.

Further, JP-A 9-171801 discloses a technique of fixing a metal oxide such as titanium dioxide, or a photocatalyst particle composite containing a metal hydroxide gel, onto a substrate via an adhesive layer.

However, in these prior art techniques, the photocatalystic activity is significantly lowered because the actual reaction area of the photocatalyst is small and further because the active site of the photocatalyst is covered with a binder or an adhesive layer added for fixing photocatalyst particles. Further, there is the problem that in the photocatalyst layer (film) fixed onto the substrate, the photocatalyst particles are embedded in a binder etc. or supported by weak binding force, thus forming a site serving as an origin of cracking in the film.

Further, as shown in the examples described above, the fixing of the photo catalyst onto the surface of a substrate is the fixing thereof onto the surface of an article to be molded, and neither its application to a material to be processed after provided thereon with the photocatalyst layer, nor a method for preparation of the same, is disclosed therein. This is because there are problems that the workability of the substrate becomes poor when provided with a photocatalyst layer, to make its processing difficult and the photocatalyst layer is exfoliated if subjected to severe processing, to deteriorate the qualities of the resulting product or to worsen the functions of the photocatalyst.

Accordingly, when the surface of structural materials used as building members, household electrical appliances, automobiles etc. are provided with a photocatalyst layer, structural materials should be formed into the shapes of these products and then painted, followed by spray coating or brush painting of a coating fluid containing the photocatalyst. In the spray coating or brush painting, however, there is a considerable loss in the coating fluid, and costs are considerably increased due to a decrease in yield resulting from deficiency etc. in the conditions of the surface of the product. Further, because the articles subjected to coating are final products, calcining after application of the coating fluid requires a large drying oven and a space therefor. Accordingly, there are few examples where a photocatalyst layer is provided on the surfaces of substrates for molded articles such as building materials, household electrical appliances and automobiles.

At present, as structural materials to be processed to building members, household electrical appliances, coated metal plates (precoated metal plates) coated with paints of final product color or of half tone in a continuous process such as roll coating onto the surfaces of metallic base materials are used. A coated film on the precoated metal plate has been endowed with performance such as film color, workability, weathering resistance, corrosion resistance, hiding properties, lubricating properties etc. Accordingly, said metal plate can be cut into pieces of desired size, molded and assembled to give a final product. A processing method using this precoated metal plate as the starting material can eliminate or simplify the coating step after assembling and is thus highly productive and economical. Accordingly, precoated metal plates serve as major materials for use in building members and household electrical appliances, and there is a need for the development of precoated metal plates provided thereon with a photocatalyst layer applicable to these uses.

The present invention was made to solve the problems in the prior art described above, and the object of the invention is to provide a titanium oxide-based photocatalyst excellent in photocatalytic activity, a material provided thereon with a layer of this titanium oxide-based photocatalyst, a method for preparation of the same, and use thereof.

DISCLOSURE OF THE INVENTION

The titanium oxide-based photocatalyst of the present invention is a photocatalyst comprising mainly titanium oxide and crystalline zirconium titanate. In the photocatalyst, titanium oxide and zirconium titanate are not merely mixed but bind strongly to each other in an integrated state. Accordingly, the photocatalytic activity is significantly improved. Furthermore, this titanium oxide-based photocatalyst can be used in the form of a thin layer fixed onto the surface of a substrate. In particular, a metallic material or a coated metal plate coated with paint provided thereon with a layer of this photocatalyst has excellent photocatalytic performance and good workability.

The gist of the present invention lies in a titanium oxide-based photocatalyst in item (1) described below, a material provided thereon with a layer of said titanium oxide-based photocatalyst in item (2) below, a method for preparation of the same in items (3) and (4) below, and use thereof in item (5) below.

(1) A titanium oxide-based photocatalyst comprising mainly titanium oxide and crystalline zirconium titanate wherein a ratio of zirconium to titanium by atomic percentage is in a range of 0.001 to 0.5.

This titanium oxide-based catalyst may further comprise at least one oxide selected from hafnium oxide, boron oxide and zinc oxide may be contained.

(2) A material comprising a substrate and a layer of a titanium oxide-based photocatalyst provided on the surface of the substrate. The photocatalyst comprises mainly titanium oxide and crystalline zirconium titanate wherein a ratio of zirconium to titanium by atomic percentage is in a range of 0.001 to 0.5. The term "substrate" refers to a material onto which the powdery photocatalyst is fixed to form a photocatalyst layer in the form of a thin film,.

This titanium oxide-based photocatalyst may further comprise at least one oxide selected from hafnium oxide, boron oxide and zinc oxide.

If the substrate mentioned above is a metallic material or a precoated metal plate and the material has a barrier layer between the substrate and a layer of the titanium oxide-based photocatalyst, this material has both excellent photocatalytic performance and good workability.

If an organic lubricating agent is contained in the titanium oxide-based photocatalyst layer, the workability of the material is improved.

If rutile and/or brookite titanium dioxide particles subjected to treatment of deactivating photocatalysis are contained in the barrier layer, the weathering resistance of the titanium oxide-based photocatalyst layer is improved while the bending workability of the barrier layer is improved, so the forming workability of the material is further improved.

(3) A method for preparation of a titanium oxide-based photocatalyst, which comprises preparing a mixture of a titanium compound and a zirconium compound as a starting material such that a ratio of zirconium to titanium by atomic percentage is in a range of 0.001 to 0.5, then reacting the titanium compound with the zirconium compound in a solvent or air, and calcining the reacted product in air atmosphere.

The starting material may further comprise at least one compound selected from a hafnium compound, a boron compound and a zinc compound.

(4) A method for producing a material comprising a substrate and a layer of a titanium oxide-based photocatalyst provided on the surface of the substrate, which comprises coating the surface of the substrate with a coating agent which contains any one of an organic solvent, water, a binder or both an organic solvent and binder and a mixture for forming a layer of the titanium oxide-based photocatalyst composed mainly of titanium oxide and crystalline zirconium titanate wherein a ratio of zirconium to titanium by atomic percentage is in a range of 0.001 to 0.5, followed by calcination thereof.

The mixture for forming a layer of the titanium oxide-based catalyst may further comprise at least one compound selected from a hafnium compound, a boron compound and a zinc compound.

A material having both superior photocatalytic performance and good workability, provided thereon with a layer of the titanium oxide-based photocatalyst, can be produced by coating the surface of a metallic material or a precoated metal plate as the substrate with a coating fluid forming a barrier layer, then calcining thereof to form a barrier layer, and coating the surface of the barrier layer with a coating agent forming a layer of the titanium oxide-based photocatalyst described in item (1) above, followed by calcining thereof.

(5) Use of a titanium oxide-based photocatalyst or a material provided thereon with a titanium oxide-based photocatalyst layer. Substances in air or in water or substances adhering to the surface of the material are treated under photo irradiation with a titanium oxide-based photocatalyst or with a material having a layer of the titanium oxide-based photocatalyst provided on the surface of the substrate. Thus the photocatalyst comprises mainly titanium oxide and crystalline zirconium titanate wherein a ratio of zirconium to titanium by atomic percentage is in a range of 0.001 to 0.5.

The titanium oxide-based photocatalyst, or a layer made of the titanium oxide-based photocatalyst formed on the surface of a substrate, may further comprise at least one oxide selected from hafnium oxide, boron oxide and zinc oxide.

Further, the material with a layer made of the titanium oxide-based photocatalyst provided on the surface of a substrate may be a material having a barrier layer between the substrate such as a metallic material or a precoated metal plate and a layer made of the titanium oxide-based photocatalyst.

BRIEF DESCRIPTION OF THE DRAWINGS

FIG. 1 shows preferable calcining conditions after application of a barrier layer-forming coating fluid or a photocatalyst layer-forming coating fluid.

FIG. 2 is a chart showing the results of X-ray diffraction of photocatalysts in Test Nos. 1-1 to 1-5 in Example 1, where the relationship between the detection angle and intensity of secondary X-ray is shown.

BEST MODE FOR CARRYING OUT THE INVENTION

Hereinafter, the titanium oxide-based photocatalyst of the present invention (hereinafter, also called "the photocatalyst of the present invention" or "this photocatalyst"), a material provided thereon with a layer made of this photo catalyst, a method for preparation of the same, and use thereof are described in detail.

(1) Titanium oxide-based photocatalyst

As described above, the photocatalyst of the present invention is composed mainly of titanium oxide and crystalline zirconium titanate. The term "mainly" indicates that this photocatalyst may contain amorphous zirconium titanate and oxides of hafnium, boron and zinc.

The photocatalyst of the present invention is characterized by the constitution in item (a) below and effect in item (b) below. Accordingly, superior photocatalytic activity is achieved.

(a) The photocatalyst of the present invention is composed mainly of titanium oxide and crystalline zirconium titanate. Further, a ratio of Zr to Ti by atomic percentage (Zr/Ti; hereinafter the ratio of Zr or other metals to Ti is expressed in terms of atomic percentage) is in a range of 0.001 to 0.5.

(b) To improve the photocatalystic activity, it is generally effective to improve the formation of electrons and holes by photoexcitation, that is, the efficiency of separation of electrons from holes (charge separation). For example, it is well-known that in the photosynthesis system in plants, light-absorbing dyes and a plurality of electron carriers are present in chlorophyll in plants, and by their electronic interaction, electrons are effectively separated from holes to achieve stable electron separation for a prolonged period of time.

In the photocatalyst of the present invention, crystalline zirconium titanate is allowed to be present in titanium dioxide particles, and by utilizing electronic interaction of the 2 elements in a semiconductor, the efficiency of charge separation of titanium dioxide acting as the photocatalyst is improved. That is, in the photocatalyst of the present invention, a part of crystalline zirconium titanate formed by reaction of the titanium compound with the zirconium compound binds strongly via Ti-O-Zr bonds to titanium dioxide particles. In other words, zirconium titanate also acts as a binder for titanium dioxide particles. Accordingly, the photocatalyst particles have a completely integrated network structure, and accordingly, the above-described electronic interaction extends to the whole of the network whereby electrons are effectively separated from holes. As a result, the efficiency of charge separation of titanium dioxide is improved, and the photocatalystic activity is thereby improved significantly.

Further, the presence of crystalline zirconium titanate functions for preventing the growth of titanium dioxide particles, and as a result, there is also the effect of lowering the probability of charge recombination between electrons and holes optically formed in titanium dioxide in the particles.

If zirconium titanate is amorphous, there are many lattice defects as a cause of charge recombination in the semiconductor. Accordingly, the efficiency of charge separation of zirconium titanate itself is low, the efficiency of charge separation of titanium oxide is not raised, so there is little improvement in the photocatalytic activity.

As described above, in the photocatalyst of the present invention, crystalline zirconium titanate is allowed to be present in titanium dioxide particles (that is, both of them are not merely mixed but integrated into one body via Ti-O-Zr bonds), and titanium dioxide particles and zirconium titanate are allowed to be coexistent so as to exhibit the maximum improving effect of photocatalytic performance.

The titanium dioxide in the photocatalyst of the present invention may be amorphous or crystalline. When it is crystalline, titanium dioxide may be either anatase or rutile. The crystal form is determined depending on selection of calcination temperature for calcining a compounding material containing the titanium compound and zirconium compound.

The zirconium oxide in the photocatalyst is allowed to be present as crystalline zirconium titanate. The reason that zirconium oxide should be crystalline is described above. However, depending on the process for preparing the photocatalyst, zirconium titanate may not completely be crystallized, but the activity is improved if crystalline zirconium titanate is contained in a small amount.

As described above, the relationship between Ti and Zr contained in the photocatalyst of the present invention should be in a range of 0.001 to 0.5 when expressed in terms of the ratio (Zr/Ti) of Zr present as zirconium titanate and Ti as titanium dioxide and zirconium titanate. If the ratio is less than 0.001, the amount of crystalline zirconium titanate is small, and thus the effect cannot be obtained. On the other hand, if the ratio exceeds 0.5, titanium dioxide and crystalline zirconium titanate are hardly formed depending on the preparing condition. The Zr/Ti ratio is preferably in the range of 0.01 to 0.3.

The titanium oxide-based photocatalyst of this invention may contain at least one of hafnium oxide, boron oxide and zinc oxide. These metal oxides improve the photocatalytic activity, reaction selectivity and prevent deterioration of the photocatalyst activity and are further effective for improving the pulverizibility of a compounding material described below (that is, a compounding material which upon calcination, forms a photocatalyst) when finely ground before application to a substrate.

The content of these oxides is preferably 0.3 or less in terms of the ratio thereof to Ti in the photocatalyst (M/Ti, M is a metal element〈Hf, B, Zn〉; and if two or more oxides are contained, M/Ti is the ratio of the total amount of these metal elements to Ti). If the ratio exceeds 0.3, the structure of titanium dioxide and zirconium titanate is easily broken, and the photocatalytic activity is lowered in many cases. The lower limit of these oxides if added is preferably 0.001.

Further, at least one metal or metal compound selected from V, Fe, Zn, Ru, Rh, Pt, Ag, Pd and Cu and metal compounds thereof can also be contained in the inside and/or on the surface of the photocatalyst perticles of the present invention. By incorporating these components, the performance of the photocatalyst is further improved, and further the photocatalyst can be endowed with the functions of the components themselves, for example with antibacterial activity in the case of Zn, Ag or Cu. The metal compounds include e.g. metal oxides, hydroxides, nitrates and halogen salts.

(2) The material provided on the surface of a substrate with a layer made of the oxide titanium-based photocatalyst described in item (1) above This material is a material provided thereon with a layer of the

titanium oxide-based photocatalyst described in item (1) above which is composed mainly of titanium oxide and crystalline zirconium titanate where the ratio of zirconium to titanium (Zr/Ti) is in a range of 0.001 to 0.5. As described above, this photocatalyst may contain at least one oxide selected from hafnium oxide, boron oxide and zinc oxide. The substrate is preferably iron, chromium, nickel, zinc, manganese, aluminum, titanium, platinum, molybdenum etc. or metallic materials such as alloys composed mainly of these elements, inorganic materials such as ceramic, pottery, glass and quartz, and organic materials such as resin, wood materials and active carbon. These materials (substrates) may be used alone or as a composite material thereof.

The shape of the substrate is determined preferably depending on use etc. The substrate may be in the form of plates such as thick plate, thin plate etc., spheres such as beads or in a complicated shape usable directly as a product. The substrate may be porous or dense on the surface.

The above-described metallic material or precoated metal plate (hereinafter, the metallic material and precoated metal plate are collectively referred to simply as "metal plate") is used as the substrate for the material provided thereon with a layer of the photocatalyst of the present invention. The material may be provided with a barrier layer between the metal plate and a layer made of the photocatalyst, that is, a material having the barrier layer on the surface (at least one side) of the substrate, the barrier layer being further provided thereon with a layer of the photocatalyst described in item (1) above (hereinafter, said material is referred to "the metal plate having photocatalytic functions"). This material is a material having both superior photocatalytic functions and good workability.

Hereinafter, this metal plate having photocatalytic functions is described in detail.

Metal plate:

In the metal plate having photocatalytic functions, the substrate may use any known precoated metal plates in addition to the metallic materials described above. The surface of the metallic material may have been subjected to various kinds of plating. Generally, the base material of the precoated metal plate includes a wide variety of cold rolled steel plates for drawing and high-tensile cold rolled steel plates, or various kinds of plated steel sheets of cold rolled steel plates subjected to plating such as Zn plating, Zn-based alloy plating such as Zn-Al, Zn-Fe, Zn-Mn, Al plating, and Al-based alloy plating such as Al-Mn and Al-Zn. However, the base material is not limited to the steel plates or plated steel sheets described above, and may include various kinds of hot rolled steel plates, or steel plates having these hot rolled steel plates subjected to various kinds of plating, or may be stainless steel plates such as ferritic or austenitic steel plates or various aluminum plates.

If the metal plate is a precoated metal plate, the coating applied onto the surface of the base material can use acrylic, melamine, polyester, polyurethane or vinyl chloride resins paint and other known organic resin paints. Although the thickness and color tone of the coated film are arbitrary, the thickness is generally 3 to 100 $\mu$m.

Barrier layer:

If the substrate in the metal plate having photocatalyst functions is a precoated metal plate, its coated film is damaged upon contacting directly with photocatalyst particles by the oxidizing action of holes generated by photocatalytic reaction (hereinafter, such damage is referred to as "chalking"). Hence, a material capable of blocking the photocatalytic action is allowed to be present in the form of a thin film between the coated film on the precoated metal plate and the layer of the photocatalyst of the present invention, to prevent the chalking of the coated film by the photocatalytic action.

Further, if the substrate in said metal plate is a metallic material not having a coated film, such as stainless steel plate, the surface of the metal where the photocatalyst layer is directly contacted with the metallic material is corroded upon calcination or with an acid contained in a coating fluid of the photocatalyst, whereby metal atoms or metal ions are diffused from the metal plate as the substrate to the photocatalyst layer, thus significantly deteriorating the photocatalytic activity in some cases. Accordingly, a material preventing diffusion of metals is allowed to be present in a thin film between the metallic material and the photocatalyst layer to prevent the reduction of the photocatalytic activity, similarly to the case of the precoated metal plate.

Such thin films for blocking the photocatalytic action or preventing the diffusion of metals from the substrate are referred to as "barrier layer".

The barrier layer can make use of an inorganic material or an inorganic and organic composite material which is not degraded even if it is contacted with photocatalyst particles. The inorganic material can make use of e.g. silicon oxides, aluminum oxides and zirconium oxides. Silicon oxides (particularly, $SiO_2$) or aluminum oxides (particularly $Al_2O_3$) which are conventionally used as materials for coating the surfaces of titanium oxide particles are particularly preferable for preventing the chalking caused by the photocatalytic action of titanium dioxide as a general white paint.

The diameter of oxide particles described above is preferably 0.01 to 1 μm. The particle diameter can be measured under a transmission electron microscope. If the particle diameter exceeds 1 μm, the adhesion of the barrier layer to the coated film or the metal surface may be deteriorated. The smaller particle diameter is preferable, but diameters of less than 0.01 μm are not general because such diameters are hardly achieved by a conventional means. These oxide particles are those which can be obtained in a method known in the art. For example, silicon oxide particles represented by $SiO_2$ can be obtained by the sol-gel method known in the art.

The inorganic and organic composite material includes silicon-based resin, silane coupling reagent, fluorine-based resin, and titanate-based coupling agents.

The inorganic material or the inorganic and organic composite material described above can be used alone or in combination thereof. The content (total content if used in combination) is preferably 20% by weight or more relative to the weight of the barrier layer. If the content is less than 20% by weight, the adhesion of the barrier layer to the coated film or the metal surface may be deficient. The upper limit of the content may be 100% by weight, but if the content exceeds 80% by weight, the strength of the coated film may be deficient, so the upper limit is more preferably 80% by weight.

If the substrate of the metal plate having photocatalytic functions is a precoated metal plate, rutile and/or brookite titanium dioxide particles subjected to treatment of deactivating photocatalysis are preferably contained in the barrier layer in order to improve the weathering resistance of the coated film when used outdoors. The treatment of deactivating photocatalysis refers to treatment of coating the surfaces of titanium dioxide particles with silica, alumina, zirconia or the like. Because these titanium dioxide particles absorb UV rays, the amount of UV rays reaching the coated film of the precoated metal plate is reduced and the deterioration of the resin is thus prevented.

Further, if a suitable amount of titanium dioxide particles subjected to treatment of deactivating photocatalysis is contained in the barrier layer, the bending processing of the barrier layer is improved. This is probably due to the relaxation of stress generated in the barrier layer at the time of processing. However, if titanium dioxide particles are contained excessively, the workability of the barrier layer may be deteriorated. Accordingly, the content of titanium dioxide particles subjected to the treatment of deactivating photocatalysis described above is preferably not more than 80% based on the weight of the barrier layer. The range of 20 to 65% by weight is more preferable because the balance between weathering resistance and processability is good.

The barrier layer may contain UV absorbers of benzotriazol group, benzophenon group, oxalic anilide cyanoacrylate group for the purpose of improving weathering resistance, besides titanium oxides such as silicon oxides for blocking the photocatalytic action or preventing the diffusion of metals from the substrate, or titanium dioxide particles subjected to the treatment of deactivating photocatalysis for improving weathering resistance.

The thickness of the barrier layer is preferably 0.05 to 10 μm. If the thickness is less than 0.05 μm, the effect of preventing chalking or preventing diffusion of metals is inadequate. On the other hand, if the thickness exceeds 10 μm, the effect of preventing chalking and diffusion of metals is saturated, so its thickness of more than 10 μm is not economical. When the thickness of each of the barrier layer and the photocatalyst layer described below is suitable, the transparency of these layers can be maintained, and thus the design of the metal plate itself, such as color tone and glossiness, will not be lost even if the barrier layer and the photocatalyst layer are provided on the metal plate.

Photocatalyst layer:

The photocatalyst described in item (1) above, which is composed mainly of titanium oxide and crystalline zirconium titanate, is used as the photocatalyst. In place of this photocatalyst, generally used semiconductor photocatalysts such as titanium dioxide, zinc oxide, cadmium sulfide and iron oxide, though being inferior in photocatalytic performance, may be used alone or in combination. Particularly in consideration of the safety of the photocatalyst itself, its availability and the design of a metal plate as the substrate, titanium dioxide excellent in transparency is preferable. Alternatively, the titanium oxide-based photocatalyst comprising titanium dioxide or crystalline zirconium titanate may be combined with generally used photocatalysts described above.

The size of the photocatalyst particle is preferably 0.05 to 1 μm in average particle diameter determined by observation under a transmission electron microscope. The photocatalyst particle is preferably smaller for attaining higher catalytic activity, and if the particle diameter exceeds 1 μm, the photocatalytic activity is lowered. Photocatalyst particles with a particle diameter of less than 0.05 μm are hardly obtained because their classification is difficult in a usual means.

The size of crystals constituting the photocatalyst particles is preferably 5 to 50 nm. The size of crystals is calculated from a diffraction peak from the face (101) of anatase crystals obtained in X-ray diffraction. The size of crystals of more than 50 nm is not preferable because the photocatalytic activity is lowered. The size of crystals can be made as small as possible because as a smaller size brings about a higher photocatalytic activity, but crystals with a size of less than 5 nm cannot be obtained in conventional means.

The thickness of the photocatalyst layer is preferably 0.1 to 10 μm. If the thickness is less than 0.1 μm, the effect of the photocatalyst is deficient. The thickness is more preferably 0.3 μm or more. Its thickness of more than 10 μm is not preferable since the effect of the photocatalyst is saturated and the workability of the photocatalyst layer is worsened. If the photocatalyst is subjected to processing under severe conditions, the thickness is preferably 5 μm or less.

The content of photocatalyst particles is preferably in the range of 10 to 90% based on the weight of the photocatalyst layer. If the content is less than 10% by weight, the functions of the photocatalyst may be inadequate. As the content of photocatalyst particles is increased, the effect of the photocatalyst is also increased, but its content of more than 90% by weight is not preferable since cracking is increased on the surface of the film.

Besides the photocatalyst particles described above, the photocatalyst layer may contain fluorine-based resin, colloidal alumina, chromic acid, chromate, phosphoric acid, phosphate etc. in an amount of 90% based on the weight of the photocatalyst layer in order to improve the strength and adhesion of the coated film. Peptizers (i.e. anions such as nitrate ions and chloride ions) contained inevitably in the photocatalyst layer-forming coating fluid described below may remain in the photocatalyst layer.

The surface of the photocatalyst layer has high wetting, high frictional properties toward a mold etc., and high sliding resistance when pressed against a tool. Accordingly, there does not occur any problem when the photocatalyst is subjected to relatively slight bending processing, but if subjected to severe processing such as deep drawing, the photocatalyst undergoes cracking, mold dragging, and dimension and shape insufficiency or exfoliation of the photocatalyst layer.

To prevent inadequate forming when the metal plate having photocatalyst functions is formed, an organic lubricating agent is preferably contained in the photocatalyst layer. The organic lubricating agent contained in the photocatalyst layer includes natural wax, polyolefin-based wax, oxidized polyolefin-based wax, denatured polyolefin-based wax, microcrystalline wax, which may be used alone or in combination thereof. The wax particles described above are decomposed by the photocatalytic action after forming and removed from the photocatalyst layer, so the photocatalytic activity of the product is improved. Use of other wax than those described above is not preferable because the photocatalytic activity of the photocatalyst layer is deteriorated.

To achieve the lubricant effect at the time of forming, the content of the organic lubricating agent is preferably 0.1% or more based on the weight of the photocatalyst layer. However, if the content of the organic lubricating agent exceeds 10% by weight, the efficiency of degradation by the photocatalytic action described above is significantly deteriorated. Accordingly, the upper limit of the content of the organic lubricating agent is preferably 10% based on the weight of the photocatalyst layer. The amount of the organic lubricating agent is an amount which is suitable for drawing and is desirably lower, so its amount is more preferably not more than 5% by weight.

The organic lubricating agent is preferably a granular solid lubricating agent. If the granular solid lubricating agent is used, the photocatalyst particles are not coated thereon with the organic lubricating agent, and thus the photocatalytic functions of the photocatalyst particles can be sufficiently exhibited. A liquid lubricating agent is not preferable because the surfaces of the photocatalyst particles are covered with it.

The particle diameter of the organic lubricating agent, in terms of average diameter measured by laser diffraction, is preferably not less than the thickness of the photocatalyst layer. If the average diameter is less than the thickness of the photocatalyst layer, the effect of the lubricating agent is insufficient. If the average particle diameter is too large, the organic lubricating agent is exfoliated from the photocatalyst layer, and adheres to the surface after drawing to deteriorate the state of the surface. Accordingly, the average particle diameter is preferably not more than 5 μm. The average particle diameter is more preferably not more than the thickness of the photocatalyst layer plus 3 μm.

(3) Method for preparation of the titanium oxide-based photocatalyst described in item (1) above

The titanium oxide-based photocatalyst described in item (1) above, composed mainly of titanium oxide and crystalline zirconium titanate wherein the ratio of zirconium to titanium (Zr/Ti) is 0.001 or more to 0.5 or less, can be produced in the following process. This photocatalyst may comprise at least one oxide of hafnium oxide, boron oxide and zinc oxide.

The amounts of the titanium compound and zirconium compound incorporated are determined such that the ratio of zirconium to titanium (Zr/Ti) in the starting materials falls under the range of 0.001 to 0.5. Then, the titanium compound and zirconium compound in these amounts are well mixed in a solvent such as alcohol or water (hereinafter, this procedure is referred to simply as "contacting"). By this procedure of contacting, the titanium compound is reacted with the zirconium compound to form a precursor of the photocatalyst. The solvent etc. are removed from this precursor as necessary and dried at a temperature of from room temperature to about 100°C.

Then, the resulting dried product is calcined in air atmosphere whereby the photocatalyst of the present invention can be produced. With Zr/Ti given in the range described above, the photocatalyst containing crystalline zirconium titanate and having a high photocatalytic activity can be obtained without using any process with special conditions.

To obtain a more active titanium oxide-based photocatalyst, it is preferable that the above-described precursor of the photocatalyst is further hydrolyzed in water or with moisture in air, or with nitric acid, hydrochloric acid etc., and then the product is separated by filtration or by distilling the solvent away under reduced pressure, dried and calcined at a predetermined temperature. Alternatively, the precursor is hydrolyzed in water, heated or refluxed at a temperature in the range of about 80 to 100°C for 10 hours or more, and further the product is separated by filtration or by distilling the solvent away under reduced pressure, dried and calcined whereby the photocatalyst having a higher catalytic activity can be obtained.

The calcination temperature is preferably 200 to 900°C. At a temperature of less than 200°C, organic matter remaining in the catalyst is hardly evaporated during preparation. Further, if the calcination temperature exceeds 900°C, the photocatalyst particles readily grow, so the specific surface area is reduced. In this case, the photocatalytic activity tends to be lowered. The calcination temperature is more preferably in the range of 500 to 800°C.

The titanium compound used in the process described above includes titanium alcoxides such as titanium tetraethoxide, titanium tetra-n-butoxide and titanium tetra-i-propoxide, oxide precursors such as titanium sulfate and titanium tetrachloride, and products obtained by partial hydrolysis of these materials, or titanium hydroxide, hydrated titanium dioxide or fine titanium dioxide particles.

The fine titanium dioxide particles may be amorphous and/or crystalline. If the particles are crystalline, the type of crystals may be anatase, rutile and/or brookite.

Further, titanium hydroxide, hydrated titanium dioxide or fine titanium dioxide particles may be in any form of powder, a suspension or a highly dispersed sol fluid.

The size (particle diameter) of fine titanium dioxide particles is preferably 200 nm or less. This is because if the diameter is larger than this size, their dispersibility in solution is poor and the titanium oxide-based photocatalyst of the present invention having a high photocatalytic activity cannot be obtained in many cases. The size is more preferably 100 nm or less, more preferably 50 nm or less.

Fine titanium dioxide particles may be those commercially available, but those prepared by being previously subjected to treatment such as hydrolysis are more preferable to obtain the titanium oxide-based photocatalyst of the present invention having a high photocatalytic activity.

The zirconium compound is preferably zirconium alcoxides such as zirconium tetra-n-propoxide and zirconium-n-tetrabutoxide, oxide precursors such as zirconium tetrachloride and zirconium oxychloride, finely divided zirconium oxide and similarly finely divided zirconium titanate. Fine zirconium oxide particles or fine zirconium titanate particles may be crystalline and/or amorphous. If the fine zirconium titanate particles are amorphous, they shall be crystallized at the stage of calcination after contacting with the titanium compound.

Further, the fine zirconium oxide particles and fine zirconium titanate particles described above may be in any form of powder, a suspension or a highly dispersed sol fluid.

The size (particle diameter) of fine zirconium oxide particles and fine zirconium titanate particles is preferably 200 nm or less, similarly to that of the fine titanium dioxide particles described above. This is because if the diameter is larger than 200 nm, their dispersibility in solvent is poor and the photocatalyst of the present invention having a high photocatalytic activity cannot be obtained in many cases. The size is more preferably 100 nm or less, more preferably 50 nm or less.

The fine zirconium oxide particles and fine zirconium titanate particles may be those commercially available. However, those prepared by previously subjecting the above-described zirconium compound to treatment (e.g. hydrolysis) are more preferable than fine zirconium oxide particles, in order to obtain the more active photocatalyst of the present invention. In addition, fine zirconium titanate particles prepared from the titanium compound and zirconium compound by the sol-gel method are more preferable than fine zirconium titanate particles.

If the titanium compound is contacted with the zirconium compound in a solution by the sol-gel method or by impregnation, the combination of both the compounds in the form of oxide precursors or the combination of an oxide precursor as one compound and fine oxide particles as the other compound is preferable. If both the compounds are fine oxide particles or sols containing these particles, they are not contacted with each other in a solution, and thus the photocatalyst excellent in photocatalytic activity is hardly obtained. If at least one of them is an oxide precursor, both of the compounds are easily contacted with each other in a solution.

The procedure of contacting the titanium compound with the zirconium compound with each other in the above-predetermined amounts (whereby the titanium compound is reacted with the zirconium compound) may not only be conducted in a solvent but may also be kneaded in the form of solids in air. In this case, any combinations described above may be used. That is, it is possible to use the combination of both of the titanium compound and zirconium compound in the form of oxide precursors, the combination of an oxide precursor as one compound and fine oxide particles as the other compound, and the combination of both the compounds in the form of fine oxide particles.

If oxides of hafnium, boron, zinc etc. are contained in the photocatalyst, it is preferable to add fine particles or precursors of these oxides, for example alcoxides or nitrates of these elements when the titanium compound is contacted with the zirconium compound. Further, these oxides may be added and kneaded in the form of solids. Alternatively, the photocatalyst after calcination may be impregnated with oxide precursors such as alcoxides or nitrates of these elements and again calcined at the temperature at which the precursors are converted into oxides. The calcination temperature in these cases is preferably in the range of 500 to 800°C at which zirconium titanate is effectively crystallized thereby giving the highly active titanium oxide-based photo catalyst.

(4) Method for preparation of the material described in item (2) above

For coating with a coating agent for production of this material, there are the following two methods:

In one method, a compounding material for forming a layer of the titanium oxide-based photocatalyst (the photocatalyst of the present invention) composed mainly of titanium dioxide and crystalline zirconium titanate wherein the ratio of zirconium to titanium (Zr/Ti) is 0.001 or more to 0.5 or less mixed with an organic solvent such as alcohol or with water, then finely ground in a ball mill and uniformly dispersed to prepare a coating agent, and the surface of a substrate is coated with this coating agent.

The compounding material for forming a titanium oxide-based photocatalyst layer described above is a material which can be converted by calcination or mere calcining into the photocatalyst layer, and it is a material obtained by e.g. contacting the titanium compound with the zirconium compound in a solvent or in the form of solids and calcining them, which may be further calcined to form the photocatalyst. Further, the above-described oxides of hafnium or boron may be contained.

In the other method, a binder is added to the above-described compounding material for forming a titanium oxide-based photocatalyst layer, or further a solvent is added thereto, and the resulting material is used as the coating agent. The binder can use thermoplastic acrylic resin, inorganic glass and thermosetting fluorine-based resin, epoxy resin and siloxane resin.

After the surface of the substrate was covered (e.g. coated) with the compounding material according to these methods, it is dried as necessary and calcined at a temperature of less than the pyrolysis temperature of the substrate or the binder whereby a material having high photocatalytic performance which comprises the titanium oxide-based photocatalyst bound strongly to the surface thereof is obtained. As the substrate, the material of the type and shape described above may be used.

The calcination temperature may basically be in the temperature range used for producing the titanium oxide-based catalyst described in item (1) above and can be determined in consideration of the degradation temperature of the substrate used or the pyrolysis temperature of a binder if used.

The method of coating the substrate with the coating agent includes spin coating, dip coating, spray coating, bar coating, roll coating etc., and any of these techniques may be used.

The thickness of the photocatalyst layer is not particularly limited. However, if a binder is not used, the thickness is preferably 0.05 to 2 μm. This is because if the thickness of the layer exceeds 2 μm, there is little improvement of the photocatalytic activity and the layer is easily exfoliated, while if the thickness is less than 0.05 μm, sufficient photocatalytic activity cannot be obtained. If a binder is used, the thickness of the layer is preferably 50 μm or less. If the thickness exceeds this range, film formability becomes poor, an uniform layer is hardly obtained, and costs are raised.

Now, a method for preparation of the metal plate having photocatalytic functions is described.

To produce this metal plate having photocatalytic functions, a coating fluid for forming a barrier layer is coated on the surface of a substrate (metal plate) and then dried to form a barrier layer, and the surface of the barrier layer is coated with a coating fluid for forming a titanium oxide-based photocatalyst layer and then dried.

Specifically, the coating fluid for forming a barrier layer is applied onto at least one face of the above described substrate metal plate known in the art and dried to form a barrier layer, and further the barrier layer is provided thereon with the titanium oxide-based photocatalyst described in item (1) above or with a coating fluid containing this photocatalyst and an organic lubricating agent and then dried to form a photocatalyst layer.

The coating fluid for forming a barrier layer is a coating composition comprising oxides for blocking the above-described photocatalytic action or preventing the diffusion of metals from the substrate, as well as coating additives such as bridging agent, defoamer and leveling agent, which are dispersed in suitable amounts in a solvent.

As the bridging agent, a known silane coupling agent, a melamineisocyanate compound etc. can be used. The defoamer may be a purlonic surface active agent, polypropylene glycol etc., and the leveling agent may be dimethyl polysiloxane, polyacrylate etc. known in the art. The solvent used may be any solvents such as water, various alcohols, toluene, xylene etc. known in the art. Further, for improving weathering resistance, titanium dioxide particles subjected to the above-described treatment of deactivating photocatalysis, and an UV absorber, are contained in suitable amounts. Further, a wide variety of conventionally used coloring pigments, body pigments and organic pigments may be arbitrarily added.

The coating fluid for forming a photocatalyst layer comprises the above-described titanium oxide-based photocatalyst, an inorganic binder and the coating additives known in the art, such as bridging agent, defoamer, leveling agent etc. described above, which are dispersed in the above-described known solvent to form a coating composition. If workability is required, the above-described organic lubricating agent is further mixed to give a coating composition.

To apply the respective coating fluids for forming a barrier layer and a photocatalyst layer onto a metal plate, any techniques known in the art, such as brush painting, spraying and impregnation can be used, but roll coating is preferable because of high coating rates, good yield of coatings and products, and excellent state of the surface. For the thickness of each layer when coated, the thickness of the layer after calcining shall be 0.05 to 10 $\mu$m for the barrier layer and 0.1 to 10 $\mu$m for the photocatalyst layer.

The calcining after application of the barrier layer-forming coating fluid may be conducted basically by selecting the temperature and time such that the metal plate itself is not softened or deformed and the barrier layer demonstrates its functions sufficiently.

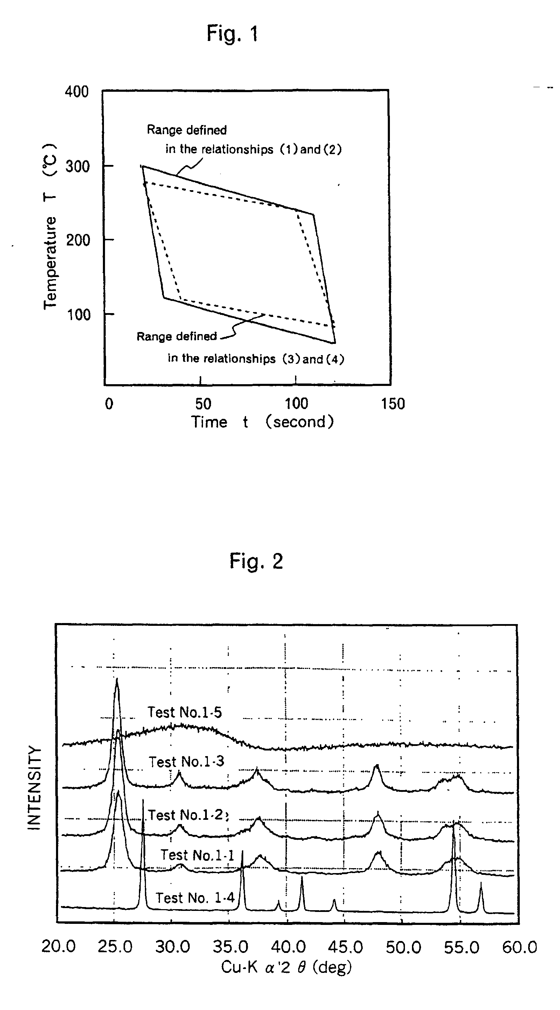

If the substrate is a coated steel plate, the calcining temperature $T_1$ ($°C$) and the calcining time $t_1$ (seconds) are selected preferably within the ranges defined in the following relationships (1) and (2). This range corresponds to the range encircled by the solid line in FIG. 1.

$$(-0.75t_1 + 145) \leq T_1 \leq (-0.75 t_1 + 315) \tag{1}$$

$$(-17.75t_1 + 655) \leq T_1 \leq (-17.75t_1 + 2185) \tag{2}$$

If the calcining temperature and calcining time are a lower temperature and a shorter time than the range encircled by the solid line in FIG. 1, the coated film is hardly dried, the solvent remains without evaporation in the barrier layer, and the adhesion of the substrate to the barrier layer may not be preferable. On the other hand, if the calcining temperature and calcining time are a higher temperature or a longer time than the range encircled by the solid line in FIG. 1, the coated film is colored and the color tone of the coated substrate plate is changed to cause a problem with the design of the precoated metal plate, and calcining requires a longer time and is thus economically disadvantageous.

The calcining after application of the photocatalyst layer-forming coating fluid may be conducted such that the calcining temperature $T_2$ ($°C$) and the calcining time $t_2$ (seconds) fall under the ranges defined in the following relationships (3) and (4). This range corresponds to the range encircled by the dotted line in FIG. 1.

$$(-0.5t_2 + 140) \leq T_2 \leq (-0.5t_2 + 290) \tag{3}$$

$$(-8t_2 + 440) \leq T_2 \leq (-8t_2 + 1040) \tag{4}$$

If the calcining temperature and calcining time are a lower temperature and a shorter time than the range encircled by the dotted line in FIG. 1, the coated film is hardly dried, the solvent remains without evaporation in the photocatalyst layer, and the adhesion between the photocatalyst layer and the barrier layer may not be preferable, similarly to the case of application of the barrier layer-forming coating fluid. On the other hand, if the calcining temperature and calcining time are a higher temperature or a longer time than the range encircled by the dotted line in FIG. 1, the coated film is colored and the color tone of the coated substrate plate is changed to cause a problem with the design of the precoated metal plate, and calcining requires a longer time and is thus economically disadvantageous.

On the other hand, if the substrate is a coating-free metallic material such as stainless steel plate, calcining conditions are considerably relaxed after the barrier layer-forming coating fluid and the photocatalyst layer-forming coating fluid were applied respectively. Treatment at a temperature in the range of 100 to 500°C for 1 minute or more suffices in the case of the stainless steel plate. However, at a temperature exceeding 300 °C, the substrate may be oxidized or discolored, so the treatment time is preferably 5 minutes or less.

After the photocatalyst layer was calcined, the photocatalyst is cooled preferably at a rate of 5 to 100 °C/sec. If the cooling rate is less than 5 °C/sec., a longer time is required for cooling, while if the cooling rate exceeds 100 °C/sec., cracking or exfoliation of the coated film (photocatalyst layer) may occur.

Other treatment than described above may be conducted according to a known method. A series of treatments such as application of the coating fluid and calcining thereof may be conducted in a batch system using a cut plate, but treatment using a coiled substrate metal plate by 2-coat 2-bake type continuous coil coating facilities is preferable because of excellent qualities and economical advantage.

According to the process described in item (3) above, the photocatalyst of the present invention described in item (1) above can be easily produced, and according to the process described in item (4) above, the material described in item (2) above provided thereon with a layer made of this photocatalyst can be easily produced.

These processes are advantageous in that production costs are low because high-temperature and long calcination is not necessary. Further, even if the calcination temperature for production is in the wide range of from low to high temperatures, the high activity of the photocatalyst is maintained, so the material provided with this photocatalyst layer on various substrates can be produced regardless of substrate materials.

(5) Usage

Both the titanium oxide-based catalyst described in item (1) above, and the material provided thereon with a layer made of this titanium oxide-based catalyst as described in item (2) above exhibit photocatalytic action by irradiation with light of higher energy than the band gap of titanium dioxide, to demonstrate the superior effect of degrading various pollutants and materials adhering thereto, removing them and rendering them nontoxic. Accordingly, this titanium oxide-based photocatalyst or the material provided thereon with a layer of this photocatalyst can be used to treat materials in air or water or materials adhering to the surface of the above material under photo irradiation to demonstrate the above photocatalytic action. As used herein, the term "treatment" means that the photocatalyst or material described above is arranged in air or water and maintained such that the surface of the photocatalyst or material is irradiated with the energy light described above.

The pollutants described above refer to materials regarded as harmful to the human body. Specifically, mention can be made of gases contained in air, such as NOx (nitrogen oxides), SOx (sulfur oxides), Freon, ammonia and hydrogen sulfide, organic compounds such as aldehydes, amines, mercaptans, alcohols, BTX (benzene, toluene, xylene) and phenols, organic halogen compounds such as trihalomethane, trichloroethylene and Freon, agricultural chemicals such as herbicides, anti-fungus agents and insecticides, biologically oxygen-requiring substances such as proteins and amino acids, surface active agents, and further inorganic compounds such as cyan compounds and sulfur compounds, various heavy metal ions, and further microorganisms such as bacteria, actinomycetes, fungi and algae, and the above materials contained in water.

The adhering materials are those adhering directly to the surface of the titanium oxide-based photocatalyst or to the surface of the material provided thereon with this photocatalyst layer, and examples are microorganisms such as E. coli, staphylococcus, Pseudomonas aeruginosa and molds, oils, nicotine in tobacco, fingerprints, sludge and soil.

The light of higher energy than the band gap is preferably a light including UV rays, and specific light sources include sunlight, a fluorescent lamp, a black light, a mercury lamp and a xenon lamp. In particular, a light including UV rays having a wavelength in the vicinity of 300 to 400 nm is preferable. The optimum conditions for irradiation dose and irradiation time may be selected depending on the amount of materials to be treated.

Example 1

The titanium oxide-based photocatalysts (4 types) of the present invention and comparative photocatalysts (3 types) were produced and examined for their crystal types by X-ray diffraction, and simultaneously, their photocatalytic performance was examined using acetic acid degradation.

Table 1 shows the major compounding conditions for the examples of the present invention (Test Nos. 1-1 to 1-3 and 1-7) and comparative examples (Test Nos. 1-4 to 1-6).

Table 1

| Test No. | Titanium compound and other major additives | | Zr/Ti | Result of X-ray diffraction | | Result of acetic acid degradation | |
|---|---|---|---|---|---|---|---|
| | | | | Crystal type of titanium dioxide | Zirconium titanate crystal | Amount of reduced acetic acid (μmol) | Degree of reduction of acetic acid (%) |
| 1-1 | Titanium isopropoxide | 127.8 g | 0.042 | Anatase | Present | 7.6 | 58 |
| | Zirconium propoxide | 6.23 g | | | | | |
| 1-2 | Titanium isopropoxide | 127.8 g | 0.12 | Anatase | Present | 9.6 | 73 |
| | Zirconium pro-poxide | 17.7 g | | | | | |

Table 1 (continued)

| Test No. | Titanium compound and other major additives | | Zr/Ti | Result of X-ray diffraction | | Result of acetic acid degradation | |
|---|---|---|---|---|---|---|---|
| | | | | Crystal type of titanium dioxide | Zirconium titanate crystal | Amount of reduced acetic acid (µmol) | Degree of reduction of acetic acid (%) |
| 1-3 | Titanium iso-propoxide | 127.8 g | 0.18 | Anatase | Present | 10.0 | 76 |
| | Zirconium propoxide | 26.5 g | | | | | |
| 1-4* | Titanium isopropoxide | 127.8 g | 0 | Rutile | Absent | 0.66 | 5 |
| 1-5* | Titanium isopropoxide | 127.8 g | 0.60 | Not crystalline | Absent | 1.5 | 11 |
| | Zirconium propoxide | 88.2 g | | | | | |
| 1-6* | Sol of fine titanium dioxide particles | | 0.12 | Anatase | Absent | 8.2 | 62 |
| | Sol of fine zirconium oxide particles | | | | | | |
| 1-7 | Titanium dioxide powder | 3.9 g | 0.50 | Rutile, anatase | Present | 9.3 | 70 |
| | Zirconium titanate powder | 10.0 g | | | | | |
| (Note 1) Test Nos. 1-4, 1-5 and 1-6 given the sign "*" are Comparative Examples. | | | | | | | |

The method for preparation of the photocatalysts used in Test Nos. 1-1 to 1-5 is as follows:

First, 127.8 g of titanium isopropoxide and zirconium propoxide (70% concluded 1-propanol solution) were added to dehydrated ethanol (16 g) to give a mixture. For this preparation, the amount of zirconium propoxide was changed for each test number, to vary the ratio of Zr/Ti in the photocatalyst after calcination. The amount of zirconium propoxide and the value of Zr/Ti in the photocatalyst after calcination are as shown in Table 1, and the value of Zr/Ti is in the range of 0 to 0.60.

Then, this mixture was stirred at room temperature for 30 minutes and dropped into 750 ml distilled water. Further, 4.3 ml nitric acid was added thereto and further stirred at about 80°C for 20 hours, and the solvent was removed in vacuo, and the reaction product thus obtained was dried at 100°C for 5 hours. This reaction product was calcined at 600°C for 5 hours whereby a photocatalyst was obtained.

In Test No. 1-6, the photocatalyst was produced in the process described in the above-mentioned literature (Environ. Sci. Technol., Vol. 30 (1996), p. 647). That is, a sol containing ultrafine titanium dioxide particles was mixed with a sol containing ultrafine zirconium oxide particles (Zr/Ti = 0.12), and this fluid was placed in a commercial cellulose tube and dialyzed until its pH reached 4.0. Thereafter, the solvent was distilled away, and the resulting powder was calcined at 600°C whereby a binary oxide-based photocatalyst composed of titanium dioxide and zirconium oxide was obtained.

In Test No. 1-7, 17.4 g (0.06 mol) of titanium propoxide and 28.08 g zirconium propoxide (70% concluded 2-propanol solution: 0.06 mol) were mixed with 5 g dehydrated 2-propanol. After mixed at room temperature for 1 hour, the mixture was left for 3 days in a flat-bottom vessel and hydrolyzed with moisture in air whereby a slightly turbid gel was obtained. This gel was dried at 100°C for 5 hours and then calcined at 450°C for 5 hours whereby zirconium titanate was obtained. Further, 3.9 g commercial fine titanium dioxide powder was added to 10 g of this zirconium titanate, kneaded well by a mortar and calcined at 650°C for 5 hours. By this process, the photocatalyst of the present invention containing Ti and Zr at a ratio of 0.50 in terms of metal ratio (Zr/Ti).

The 7 test specimens described above were identified for their crystal type by X-ray diffraction and examined using acetic acid degradation. The method of acetic acid degradation is as follows:

10 mg photocatalyst and 2 ml of 6.6 mM aqueous acetic acid (13.2 μmol acetic acid) were added to a Pyrex reaction tube (content: 10 cc) which after oxygen was passed for 20 minutes, was capped with a septum cap. Then, the photocatalyst was irradiated with a light from a 500 W ultrahigh-pressure mercury lamp for 1 hour under magnetically stirring at a temperature of 20 °C. Thereafter, the amount of acetic acid in the aqueous solution was analyzed by ion chromatography to determine the amount of reduced acetic acid (amount of degraded acetic acid) to evaluate the performance of the photocatalyst.

FIG. 2 is a chart showing the relationship between the detection angle in X-ray diffraction for the photocatalysts used in Test No. 1-1 to 1-5 and secondary X-ray strength. Further, Table 1 collectively shows the measurement results of crystal type by X-ray diffraction and the amount of reduced acetic acid.

In Test Nos. 1-1 to 1-3 (examples of the present invention) shown in FIG. 2, a peak of d100 ($2\theta$ = 30.59°, shifted slightly toward larger angle in FIG. 2) for zirconium titanate was observed in addition to a peak showing anatase crystals of titanium dioxide. On the other hand, in Test Nos. 1-4 and 1-5 (comparative examples), no peak corresponding to crystals of zirconium titanate was observed. From this result, it was confirmed that there are crystals of zirconium titanate in the photocatalysts of the present invention.

As is evident from the results shown in FIG. 2 and Table 1, titanium dioxide was crystallized in Test Nos. 1-1 to 1-3 and 1-7 in the present invention and occurred as anatase and/or rutile crystals. Further, zirconium titanate was also crystallized as described above.

In these examples of the present invention, the amount of reduced acetic acid in acetic acid degradation was 7.6 to 10.0 μmol, and the degree of reduction was 58 to 76%.

On the other hand, because the photocatalyst in Test No. 1-4 in the comparative examples did not contain Zr, the degree of reduction of acetic acid was 5% and the function of the photocatalyst was hardly demonstrated. Further, the photocatalyst used in Test No. 1-5 had a Zr/Ti value of 0.60 exceeding the range specified in the present invention, so the degree of reduction of acetic acid was 11% which was extremely low as compared with the examples of the present invention.

Test No. 1-6 is an example where the Zr/Ti value is 0.12 and zirconium titanate is amorphous. The degree of reduction of acetic acid in this example is lower by 11% than that of the example (Test No. 1-2) of the present invention comprising crystalline zirconium titanate at the same ratio of Zr/Ti, and it was thus confirmed that the photocatalyst in this comparative example is inferior in performance.

Example 2

The effect of the titanium oxide-based photocatalyst of the present invention produced in Example 1 was examined when zinc oxide (Test No. 2-12), boron oxide (Test No. 2-13) and hafnium oxide (Test No. 2-14) were contained therein.

The method for preparation of the photocatalyst is as follows:

In Test No. 2-12, 0.66 g zinc nitrate was dissolved in 5 ml distilled water, and this mixture was impregnated into 6 g photocatalyst produced in Test No. 1-1 in Example 1. Thereafter, the solvent was distilled away by heating, and the resulting solids were calcined at 500°C for 4 hours, whereby the photocatalyst of the present invention containing zinc oxide at a Zn/Ti ratio of 0.05 was obtained.

In Test No. 2-13, 17.4 g of titanium isopropoxide, 7 g of 1-propanol solution containing 70% zirconium propoxide and 0.44 g triethyl borate were added to 5 g dehydrated 2-propanol, then mixed and stirred at room temperature for 1 hour, introduced into a flat-bottom vessel, left for 3 days and hydrolyzed with moisture in air whereby an opaque gel was obtained. This gel was dried at 100°C for 5 hours and calcined at 600°C for 4 hours whereby the photocatalyst of the present invention containing boron oxide at a B/Ti ratio of 0.05 was obtained.

In Test No. 2-14, hafnium ethoxide (1.38 g) was mixed with 3 ml of dehydrated ethanol and mixed sufficiently, and this mixture was impregnated into 6 g of the photocatalyst produced in Test No. 1-1 in Example 1. Thereafter, ethanol was distilled away by heating, and the resulting solids were calcined at 600°C for 4 hours whereby the photocatalyst of the present invention containing hafnium oxide at a Hf/Ti ratio of 0.05 was obtained.

These photocatalysts were examined using acetic acid degradation in the same manner as in Example 1. The major production conditions and the test result of acetic acid degradation are collectively shown in Table 2.

Table 2

| Test No. | Photocatalyst or titanium compound, other major additives | | Zr/Ti | M/Ti | Result of acetic acid degradation | |
|---|---|---|---|---|---|---|
| | | | | | Amount of reduced acetic acid (μmol) | Degree of reduction of acetic acid (%) |
| 2-12 | Photocatalyst powder | 6.0 g | 0.12 | Zn/Ti 0.05 | 10.2 | 77 |
| | (Test No. 1 in Example 1) | | | | | |
| | Zinc nitrate | 0.66 g | | | | |
| 2-13 | Titanium isopropoxide | 17.4 g | 0.125 | B/Ti 0.05 | 9.8 | 74 |
| | Zirconium propoxide | 4.9 g | | | | |
| | Triethyl borate | 0.44 g | | | | |
| 2-14 | Photocatalyst powder | 6.0 g | 0.042 | Hf/Ti 0.05 | 10.0 | 76 |
| | (Test No. 1 in Example 1) | | | | | |
| | Hafnium ethoxide | 0.73 g | | | | |

The degrees of reduction of acetic acid were 74 to 77% which were relatively high as compared with that of Example 1 having an almost identical value of Zr/Ti. From this result, it is evident that the photocatalytic activity is improved when zinc oxide, boron oxide or hafnium oxide is contained in the titanium oxide-based photocatalyst.

Example 3

Materials (Test Nos. 3-21 to 3-24) provided thereon with a layer of the titanium oxide-based photocatalyst of the present invention were prepared and examined for their bactericidal effect.

The method of producing materials (test specimens) used in Test Nos. 3-21 and 3-22 is as follows:

In Test No. 3-21, the photocatalyst produced in Test No. 1-1 in Example 1 was fixed onto the surface of a stainless steel plate (SUS304) to prepare a material provided with a photocatalyst layer thereon. First, 5 g of the above photocatalyst was dispersed in 100 ml commercial titania sol (titania content: 30% by weight) and further finely ground and well dispersed with 5 g glass beads (diameter: 2.0 to 2.5 mm) in the presence of a paint conditioner, and then the glass beads were removed whereby a coating agent for producing a material provided thereon with a photocatalyst layer was obtained. This coating agent was applied onto the stainless steel plate (length and width, 50 mm; thickness, 1 mm) by a bar coater, then dried at 110°C for 30 minutes, and heat-treated in an electric oven at 250°C for 10 minutes whereby a test material provided thereon with a layer of said photocatalyst was obtained.

Test No. 3-22 is an example where the zinc oxide-containing photocatalyst produced in Test No. 2-12 in Example 2 was fixed onto the surface of a resin-coated steel plate to form a material provided with a photocatalyst layer thereon. First, 5 g of the above photocatalyst was dispersed in 60 ml commercial titania sol (titania content: 20% by weight) and further finely ground with 5 g glass beads (diameter: 2.0 to 2.5 mm) in a ball mill, and then the glass beads were removed whereby a coating agent was obtained. This coating agent was applied onto the coated steel plate (length and width, 50 mm; thickness, 1 mm) by a bar coater, then dried at 110°C for 30 minutes, and heat-treated in an electric oven at 200°C for 2 minutes whereby a test material provided thereon with a layer of said photocatalyst was obtained.

On one hand, the materials (test materials) used in Test No. 3-23 and 3-24 are those provided with a barrier layer between the substrate and the photocatalyst layer, and they were produced in the following manner.

In Test No. 3-23, a barrier layer was formed in the material used in Test No. 3-21. First, a commercial silica sol (Snowteck O, Nissan Chemical Industries, Ltd.) was diluted 3-fold with ethanol to prepare a coating fluid for forming a barrier layer, and this coating fluid was spin-coated (3000 rpm) on the stainless steel plate (length and width, 50 mm; thickness, 1 mm) and heat-treated in an electric heater at 250°C for 5 minutes to form a barrier layer thereon. Then, a photocatalyst layer was formed on this barrier layer in the same manner as in Test No. 3-21.

In Test No. 3-24, a barrier layer was formed on the material used in Test No. 3-22. A barrier layer was formed on the coated steel plate (length and width, 50 mm; thickness, 1 mm) in the same manner as in Test No. 3-23, and a photocatalyst layer was formed on this barrier layer in the same manner as in Test No. 3-22.

These test specimens were evaluated for their antibacterial activity against E. coli strain W3110.

The surface of each test specimen was sterilized with 70% ethanol, and 0.2 ml physiological saline containing $2.5 \times 10^5$ E. coli cells/ml were divided into 0.025 ml aliquots (the number of E. coli microorganisms in an aliquot: $5 \times 10^4$), and each aliquot or 8 drops were dropped onto the surface of each test specimen. Then, each test specimen was irradiated with a light for 30 minutes through a filter for light weakening and an UV filter from a 250 W ultrahigh-pressure mercury lamp under the condition of 95% relative humidity. The density of UV rays at a wavelength of 366 nm on the surface of the test specimen was 1.5 mW/cm$^2$.

Thereafter, the bacterial liquid on the surface of the test specimen was washed away with 9.8 ml physiological saline, and this removed liquid was diluted, sprayed on a standard nutrient agar plate, and cultured at 35°C for 48 hours, and the number of grown colonies was counted to determine the number of viable cells.

As a result, the number of viable E. coli cells was $2.25 \times 10^3$ in Test No. 3-21 and only $1.50 \times 10^3$ in Test No. 3-22 (i.e., degrees of reduction were 95% and 97% respectively), while the number of viable E. coli cells was only $2.1 \times 10^3$ and $2.5 \times 10^3$ (i.e., degrees of reduction were 96% and 95% respectively) in Test Nos. 3-23 and 3-24 respectively where the material provided with the barrier layer between the substrate and the photocatalyst layer was used.

For comparison, physiological saline containing the same number of E. coli cells ($5 \times 10^4$ cells) as in the above example was dropped onto the surface of the stainless steel plate not coated with the titanium oxide-based photocatalyst and then irradiated with a light for 30 minutes, and E. coli-containing physiological saline was dropped onto the surface of the test material prepared in Test No. 3-21 and left in the dark for 30 minutes, and the number of viable cells thereon was measured in the method described above. As a result, the number of viable cells was $5.1 \times 10^4$ in the former and $4.3 \times 10^4$ in the latter, and there was little change in the number of viable cells.

From these results, it was supported that the titanium oxide-based photocatalyst of the present invention possesses an excellent antibacterial activity.

Example 4

The materials (Test Nos. 4-22 to 4-26) provided thereon with a layer of the titanium oxide-based photocatalyst of the present invention were prepared and examined in a test of degrading highly toxic and odorous acetaldehyde to determine their performance.

Test No. 4-22 is an example where the photocatalyst produced in Test No. 2-13 in Example 2 was fixed onto the surface of quartz to prepare a material provided with a photocatalyst layer. First, the above-described photocatalyst containing boron oxide was mixed with an alumina sol liquid to form a compounding agent for coating, and this compounding agent was coated by spraying onto a quartz plate (length and width, 40 mm; thickness 1 mm) and dried at 110°C for 30 minutes and then calcined at 500°C for 30 minutes whereby a test material provided thereon with a layer of the photo catalyst was obtained.

The method of producing the materials (test materials) used in Test No. 4-23 and 4-24 is as follows:

First, the photocatalyst used was produced in the following manner. That is, a sol of fine titanium dioxide particles and a sot of fine zirconium oxide particles were prepared respectively as the titanium compound and zirconium compound.

To prepare the sol of fine titanium dioxide particles, 80 g titanium isopropoxide was added to 16 ml isopropanol, and the mixture was dropped into 500 ml distilled water under vigorous stirring, and thereafter, 5 g nitric acid (60%) was added, and then the mixture was stirred at 80°C for 24 hours and concentrated in vacuo whereby a semitransparent sol of fine titanium dioxide particles was obtained (solid content: 15% by weight). X-ray diffraction analysis indicated that titanium dioxide contained in this sol was in a crystalline form.

The sol of fine zirconium oxide particles was prepared in the following manner. 90 g zirconium oxychloride in 23 ml distilled water (concentration: 4 mol/L) was introduced into a cylindrical tube (100 ml) made of Teflon, then stirred for 10 minutes, introduced into an autoclave where the sample was left for 4 days under heating at 195 °C. Unreacted zirconium oxychloride was removed from the resulting opaque fluid, and thereafter, the fluid was adjusted to a pH value of about 5 whereby a semitransparent zirconium oxide sol was obtained (solid content: 6% by weight). X-ray diffraction analysis indicated that zirconium oxide contained in this sol was in a highly crystalline form.

100 ml of the sol of fine titanium dioxide particles and 45 ml of the sol of fine zirconium oxide particles obtained above were mixed with each other (Zr/Ti = 0.12) and stirred at 80°C for 24 hours, and thereafter, water was removed therefrom in vacuo, and the resultant product was dried at 100°C for 5 hours. This reaction product was calcined at 600°C for 5 hours to give a photocatalyst.

The photocatalyst obtained in this manner was used to form a photocatalyst layer on the surface of a stainless steel plate in the following manner.

First, the photocatalyst described above was dispersed in water (solid content in the sol: 14% by weight), and an equal volume of alcohol was added to it to form a coating agent. The coating solution was coated by a spin coater on a stainless steel plate (length and width, 50 mm; thickness 1 mm), dried at 110°C for 30 minutes and subjected to heat treatment for 10 minutes in an electric oven at a predetermined temperature whereby a test material provided thereon with a layer of the photocatalyst was obtained. The heat-treatment temperature was 200°C in Test No. 4-23 and 500°C in Test No. 4-24.

On the other hand, the materials (test materials) used in Test Nos. 4-25 and 4-26 are those provided with a barrier layer between the substrate and the photocatalyst layer, and in Test No. 4-25, a barrier layer was formed in the material used in Test No. 4-23, and in Test No. 4-26, a barrier layer was formed in the material used in Test No. 4-24.

After the barrier layer was formed on a stainless steel layer (length and width, 50 mm; thickness, 1 mm) in the same manner as in Test No. 3-23 in Example 3, a photocatalyst layer was formed on this barrier layer in the same manner as in Test No. 4-23 or 4-24 described above.

A test of degrading acetaldehyde was conducted in the following manner. The test material was introduced into a quartz reaction cell (volume: 100 cm$^3$) which was connected to a closed circulating line (total internal volume: 870 cm$^3$). Acetaldehyde diluted with air (about 250 ppm in Test No. 4-22 and about 50 ppm in Test No. 4-23 to 4-26) was introduced into the system and then irradiated under circulation with a light through a filter for light weakening and an UV filter from a 250 W ultrahigh-pressure mercury lamp. The strength of UV ray at a wavelength of 366 nm on the surface of the sample material was 15 mW/cm$^2$ for Test No. 4-22 or 0.8 mW/cm$^2$ for Test Nos. 4-23 to 4-26. Under photo irradiation, the concentration of acetaldehyde was quantified by a gas chromatographic unit connected to the line.

As a result, by photo irradiation for 1 hour (Test No. 4-22) or 90 minutes (Test Nos. 4-23 to 4-26), the concentration of acetaldehyde was reduced to several ppm in Test No. 4-22, to about 1.0 ppm in Test No. 4-23, or to the detection limit (0.2 ppm) or less in Test No. 4-24. Further, the concentration of acetaldehyde was reduced to 0.5 ppm and the detection limit or less respectively in Test Nos. 4-25 and 4-26 both using a material provided with a barrier layer between the substrate and the photocatalyst layer.

From this result, it was confirmed that the titanium oxide-based catalyst of the present invention further has the action of degrading a toxic gas of irritating odor, such as acetaldehyde.

Example 5

A metal plate (coated steel plate, Test No. 5-2) with the photocatalytic performance of the present invention and a comparative metal plate (coated steel plate, Test No. 5-3) were prepared and examined for their photocatalytic performance and weathering resistance.

The method for preparation of the coated steel plate used in Test No. 5-2 is as follows:

A dispersion consisting of 166.4 g tetraethoxysilane (Chisso Corporation), 35.6 g methyltriethoxysilane, 138 g ethanol and 130 g deionized water was stirred at 50°C for 2 hours, followed by adding a defoamer and a leveling agent to give a coating (referred to hereinafter as "barrier layer-forming coating A").

Separately, 10 parts by weight of crystalline zirconium titanate and 90 parts by weight of titanium dioxide were mixed and calcined at 500°C in the atmosphere for 2 hours, then ground and dispersed in water to prepare a slurry with a solid content of 10% by weight. This slurry was adjusted to pH 10 with sodium hydroxide and subjected to heat treatment with steam in an autoclave at 150°C for 3 hours. Thereafter, 60% nitric acid was added to adjust it to pH 7 and the mixture was filtered whereby titanium oxide-based photocatalyst particles containing titanium dioxide and zirconium titanate were obtained. The diameter of this photocatalyst particle was 100 nm in average diameter observed under a transmission electron microscope. 60 g alumina sol (solid content: 20% by weight) produced by Nissan Chemical Industries, Ltd. was added as a binder to 100 g suspension of the photocatalyst particles in water (solid content: 15% by weight) followed by adding a defoamer to give a coating composition (referred to hereinafter as "the coating containing zirconium titanate for catalyst").

The barrier layer-forming coating A described above was roll-coated onto one side of a polyester-coated steel plate having a galvanized steel plate of 0.5 mm in thickness as the base material and dried at 240°C for 60 seconds to form a barrier layer of 2 μm in thickness. The coating containing zirconium titanate for catalyst described above was roll-coated thereon and dried at 180°C for 50 seconds in a continuous oven to form a photocatalyst layer of 1.5 μm in thickness.

The method for preparation of the coated steel plate used in Test No. 5-3 is as follows:

The same coating containing zirconium titanate for catalyst as in production of the coated steel plate used in Test No. 5-2 was roll-coated directly on the same polyester-coated steel plate as in production of the coated steel plate used in Test No. 5-2 and then dried in a continuous oven at 180°C for 50 seconds to give a layer of 1.5 μm in thickness.

First, the coated steel plate having photocatalytic functions used in Test No. 5-2, and the substrate used in Test Nos. 5-2 and 5-3 (polyester-coated steel plate: this was used as Test No. 5-4 (prior art example), were examined in a test of degrading acetaldehyde in the same manner as in Example 4 (acetaldehyde, 50 ppm; UV ray strength, 0.8 mW/cm$^2$).

The result indicated that the amount of acetaldehyde was reduced in proportion with the irradiation time by the coated steel plate in Test No. 5-2, and its concentration was reduced to several ppm after 60 minutes. On the other hand, acetaldehyde was not degraded by the coated steel plate in Test No. 5-4 having no photocatalyst layer.

Then, a weathering resistance test of each specimen obtained from the coated steel plates used in Test Nos. 5-2 and 5-3 was performed for 200 hours using a Sunshine Weather Meter in a method specified in JIS-K-7102. The result indicated that the surface of the test specimen in Test No. 5-2 was sound, whereas the photocatalyst layer was exfoliated from the coated substrate plate in the test specimen in Test No. 5-3. This is because the coated steel plate in Test No. 5-3 was not provided with a barrier layer, thus permitting the coated film to be damaged by the photocatalytic action.

INDUSTRIAL APPLICABILITY

The titanium oxide-based photocatalyst of the present invention comprises crystalline zirconium titanate and thus has a higher photocatalytic activity than that of conventional titanium oxide photocatalysts. Accordingly, this photocatalyst, and a material provided thereon with a layer of this photocatalyst, is very effective for degrading pollutants contained in the atmosphere or in water and rendering them nontoxic as well as for deodorization, (antibacterial) sterilization etc. in living space. In particular, the material provided with a layer of this photocatalyst on the surface of a precoated metal plate has both superior photocatalytic activity and good workability.

This photocatalyst, and the material provided thereon with a layer of this photocatalyst, can be easily produced according to the process of the present invention.

**Claims**

1. A titanium oxide-based photocatalyst comprising mainly titanium oxide and crystalline zirconium titanate, wherein a ratio of zirconium to titanium by atomic percentage is in a range of 0.001 to 0.5.

2. The photocatalyst according to claim 1, further comprising at least one oxide selected from hafnium oxide, boron oxide and zinc oxide.

3. A material comprising a substrate and a layer of a titanium oxide-based photocatalyst provided on a surface of the substrate, the titanium oxide-based photocatalyst comprising mainly titanium oxide and crystalline zirconium titanate, wherein a ratio of zirconium to titanium by atomic percentage is in a range of 0.001 to 0.5.

4. The material according to claim 3, wherein the titanium oxide-based photocatalyst further comprises at least one oxide selected from hafnium oxide, boron oxide and zinc oxide.

5. The material according to claim 3, further comprising a barrier layer between the surface of the substrate and the layer of the titanium oxide-based photocatalyst, wherein the substrate is a metallic material or a precoated metal plate.

6. The material according to claim 4, further comprising a barrier layer between the surface of the substrate and the layer of the titanium oxide-based photocatalyst, wherein the substrate is a metallic material or a precoated metal plate.

7. A method for producing a titanium oxide-based photocatalyst, which comprises the steps of:

preparing a mixture of a titanium compound and a zirconium compound as a starting material such that a ratio of zirconium to titanium by atomic percentage is in a range of 0.001 to 0.5;
reacting the mixture in a solvent or air atmosphere; and
calcining the reacted product in air atmosphere.

8. The method for producing the titanium oxide-based photocatalyst according to claim 7, wherein the starting material further comprises at least one compound selected from a hafnium compound, a boron compound and a zinc compound.

9. A method for producing a material comprising a substrate and a layer of a titanium oxide-based photocatalyst provided on a surface of the substrate, which comprises the steps of:

preparing a mixture for forming a layer of a titanium oxide-based photocatalyst comprising mainly titanium oxide and crystalline zirconium titanate wherein a ratio of zirconium to titanium by atomic percentage is in a range of 0.001 to 0.5;
adding any one of an organic solvent, water, a binder or both an organic solvent and a binder to the mixture to make a coating agent;
coating the surface of the substrate with the coating agent; and
calcining the coating agent on the surface to form a layer of the titanium oxide-based photocatalyst.

10. The method for producing the material according to claim 9, wherein the mixture for forming the layer of the titanium oxide-based photocatalyst further comprises at least one compound selected from a hafnium compound, a boron compound and a zinc compound.

11. A method for producing a material comprising a substrate and a layer of a titanium oxide-based photocatalyst provided on a surface of the substrate, which comprises the steps of:

coating the surface of the substrate with a coating fluid for forming a barrier layer wherein the substrate is a metallic material or a precoated metal plate;
calcining the coating fluid to form a barrier layer;
coating the surface of the barrier layer with the coating agent for forming a layer of a titanium oxide-based photocatalyst comprising mainly titanium oxide and crystalline zirconium titanate wherein a ratio of zirconium to titanium by atomic percentage is in a range of 0.001 to 0.5; and
calcining the coating agent

12. Use of a titanium oxide-based photocatalyst or a material comprising a substrate and a layer of a titanium oxide-based photocatalyst provided on a surface of the substrate, in an application that substances in air or in water or substances adhering to the material are treated under photo irradiation with the photocatalyst comprising mainly titanium oxide and crystalline zirconium titanate, wherein a ratio of zirconium to titanium by atomic percentage is in a range of 0.001 to 0.5.

13. Use of a titanium oxide-based photocatalyst or a material comprising a substrate and a layer of a titanium oxide-based photocatalyst provided on a surface of the substrate according to claim 12, wherein the photocatalyst further comprises at least one of hafnium oxide, boron oxide and zinc oxide.

14. Use of a material comprising a substrate and a layer of a titanium oxide-based photocatalyst provided on a surface of the substrate according to claim 12, wherein the substrate is a metallic material or a precoated metal plate and a barrier layer is provided between the substrate and the layer of the titanium oxide-based photo catalyst.

15. Use of a material comprising a substrate and a layer of a titanium oxide-based photocatalyst provided on a surface of the substrate according to claim 13, wherein the substrate is a metallic material or a precoated metal plate and a barrier layer is provided between the substrate and the layer of the titanium oxide-based photocatalyst.

## Fig. 1

Range defined
in the relationships (1) and (2)

Range defined
in the relationships (3) and (4)

Temperature T (°C)

Time t (second)

## Fig. 2

Test No.1-5

Test No.1-3

Test No.1-2

Test No.1-1

Test No. 1-4

INTENSITY

Cu-K α'2 θ (deg)

# INTERNATIONAL SEARCH REPORT

| International application No. |
|---|
| PCT/JP98/02744 |

| A. CLASSIFICATION OF SUBJECT MATTER |
|---|
| Int.Cl⁶ B01J35/02, 21/06, 23/06 |

According to International Patent Classification (IPC) or to both national classification and IPC

| B. FIELDS SEARCHED |
|---|
| Minimum documentation searched (classification system followed by classification symbols) |
| Int.Cl⁶ B01J35/02, 21/06, 23/06 |

Documentation searched other than minimum documentation to the extent that such documents are included in the fields searched

| Jitsuyo Shinan Koho | 1926-1996 | Toroku Jitsuyo Shinan Koho | 1994-1998 |
|---|---|---|---|
| Kokai Jitsuyo Shinan Koho | 1971-1998 | Jitsuyo Shinan Keisai Koho | 1996-1998 |

Electronic data base consulted during the international search (name of data base and, where practicable, search terms used)

## C. DOCUMENTS CONSIDERED TO BE RELEVANT

| Category* | Citation of document, with indication, where appropriate, of the relevant passages | Relevant to claim No. |
|---|---|---|
| X | JP, 01-262944, A (Nippon Shokubai Co., Ltd.), 19 October, 1989 (19. 10. 89), | 1, 3, 7, 9, 12 |
| Y | Claims ; page 2, lower right column, line 9 to page 3, upper left column, line 3 ; page 3, lower right | 5, 11, 14 |
| Y | column, line 17 to page 4, upper left column, line 11 ; page 5, Example 2 (Family: none) | 2, 4, 6, 8, 10, 13, 15 |
| Y | JP, 09-071437, A (Nippon Soda Co., Ltd.), 18 March, 1997 (18. 03. 97), Claims (Family: none) | 5, 11, 14 |
| Y | JP, 08-257411, A (Matsushita Electric Works, Ltd.), 8 October, 1996 (08. 10. 96), Claims (Family: none) | 2, 4, 6, 8, 10, 13, 15 |
| A | JP, 51-049191, A (Exxon Research & Engineering Co.), 28 April, 1976 (28. 04. 76), Claims & US, 3922235, A & DE, 2531030, A & FR, 2280429, A & GB, 1509784, A & IT, 1039248, B | 1-15 |

[X] Further documents are listed in the continuation of Box C.  [ ] See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | |
| "O" document referring to an oral disclosure, use, exhibition or other means | "Y" document of particular relevance; the claimed invention cannot be considered to involve an inventive step when the document is combined with one or more other such documents, such combination being obvious to a person skilled in the art |
| "P" document published prior to the international filing date but later than the priority date claimed | "&" document member of the same patent family |

| Date of the actual completion of the international search | Date of mailing of the international search report |
|---|---|
| 14 September, 1998 (14. 09. 98) | 22 September, 1998 (22. 09. 98) |

| Name and mailing address of the ISA/ | Authorized officer |
|---|---|
| Japanese Patent Office | |
| Facsimile No. | Telephone No. |

Form PCT/ISA/210 (second sheet) (July 1992)

## INTERNATIONAL SEARCH REPORT

| International application No. |
|---|
| PCT/JP98/02744 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP, 02-229547, A (Nippon Shokubai Co., Ltd.), 12 September, 1990 (12. 09. 90), Claims & EP, 370523, B1 & CA, 2003464, A & FI, 8905545, A & US, 5082820, A & DE, 68904053, E & KR, 9507578, B1 | 1-15 |

Form PCT/ISA/210 (continuation of second sheet) (July 1992)